Europäisches Patentamt

European Patent Office

Office européen des brevets

(19)

(11) **EP 1 104 185 A1**

(12) **DEMANDE DE BREVET EUROPEEN**

(43) Date de publication:
**30.05.2001 Bulletin 2001/22**

(21) Numéro de dépôt: **00403186.0**

(22) Date de dépôt: **16.11.2000**

(51) Int Cl.[7]: **H04N 5/57**, H04N 5/44,
G09G 1/14, H04N 9/64,
H04N 11/20

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.11.1999 FR 9914757**

(71) Demandeur: **STMicroelectronics S.A.**
**94250 Gentilly (FR)**

(72) Inventeurs:
• **Chiaruzzi, Emmanuel**
**38000 Grenoble (FR)**
• **Seigneret, Franck**
**38120 Tullins (FR)**

(74) Mandataire: **Dossmann, Gérard**
**Bureau D.A. Casalonga-Josse**
**Morassistrasse 8**
**80469 München (DE)**

(54) **Procédé et système de traitement d'images numériques**

(57) Le procédé de transformation, selon l'invention, est destiné à des images numériques comprenant des données de luminance relatives à des points de premières coordonnées et des données de chrominance relatives à des points de deuxièmes coordonnées, les données de luminance et les données de chrominance étant en nombre différent, procédé dans lequel on effectue par filtrage un traitement des données les moins nombreuses pour obtenir les dites données les moins nombreuses relativement à des points de coordonnées identiques à celles des données les plus nombreuses.

## FIG.2

EP 1 104 185 A1

**Description**

La présente invention relève du domaine du traitement des images numériques que l'on affiche sur un écran, notamment d'ordinateur ou de télévision.

Actuellement, les marchés de l'ordinateur portable et de la télévision sont en train de fusionner, sous l'effet d'entraînement du développement de l'internet et de la télévision interactive qui requiert des technologies associées. Il est donc important de pouvoir afficher des images graphiques, telles que les pages diffusées par le réseau internet, sur un écran de télévision standard avec un confort visuel acceptable par l'utilisateur.

Les systèmes utilisés jusqu'à présent pour supprimer ou limiter l'effet de scintillement dû aux forts contrastes des images graphiques sont souvent appelés filtres de "flicker". Comme l'effet de scintillement est dû au contraste entre deux lignes consécutives, autrement dit à de hautes fréquences sur une colonne verticale de l'image, les systèmes de filtre anti-scintillement basiques mettent en oeuvre un filtrage numérique vertical passe bas. Après le filtrage, deux lignes consécutives sont plus proches en terme de couleur et l'effet de scintillement est réduit.

Par ailleurs, on affiche souvent à l'écran des objets graphiques se présentant sous la forme de fenêtres ou de sous-fenêtres dont l'utilisateur peut souhaiter modifier la hauteur et/ou la largeur. Le traitement nécessité par un changement de dimensions des objets graphiques affichés entraîne le stockage dans des mémoires rapides des pixels d'une ou plusieurs lignes, d'où des coûts élevés.

Différents formats d'images peuvent être utilisés. On connaît le format YCbCr 420 avec lequel les données de luminance et celles de chrominance sont stockées séparément ou non. Les données de chrominance sont quatre fois moins nombreuses que celles de luminance, deux fois dans le sens horizontal et deux fois dans le sens vertical. Une donnée particulière de chrominance est relative à un point situé au centre de quatre points voisins pour lesquels on dispose de données de luminance, les différents points étant coplanaires. Le format YCbCr 420 est économique en terme d'espace mémoire utilisé en raison du faible nombre de données de chrominance mais n'est pas adapté au traitement des objets graphiques.

On connaît aussi le format YCbCr 444 avec lequel les données de luminance et celles de chrominance sont en nombre égal et sont relatives à des points de mêmes coordonnées. On sait préparer pour l'affichage une image sous format YCbCr 444 en disposant par concaténation les données de luminance et de chrominance les unes à la suite des autres pour chaque point de l'image.

On peut réaliser une transformation de format d'une image pour passer du format YCbCr 420 au format YCbCr 444 en temps réel dans un organe d'affichage immédiatement avant l'affichage. Cette technique n'est pas adapté au traitement des objets graphiques.

La présente invention a pour objet de remédier aux inconvénients évoqués ci-dessus.

La présente invention a pour objet un procédé de transformation graphique économique, n'utilisant qu'une taille mémoire raisonnable et adapté à des images de qualité élevée quelque soit la taille de l'objet graphique traité.

La présente invention a pour objet un procédé de transformation graphique capable d'effectuer des changements de format d'une image pour la rendre apte à un traitement graphique numérique et ce par des moyens simples.

Le procédé de transformation, selon l'invention, est prévu notamment pour des images numériques comprenant des données de luminance relatives à des points de premières coordonnées et des données de chrominance relatives à des points de deuxièmes coordonnées, les données de luminance et les données de chrominance étant en nombre différent. Le procédé comprend des étapes dans lesquelles on effectue par filtrage un traitement des données les moins nombreuses pour obtenir les dites données les moins nombreuses relativement à des points de coordonnées identiques à celles des données les plus nombreuses. Dans un mode de réalisation, on effectue un filtrage vertical et un filtrage horizontal.

Avantageusement, on effectue un filtrage à décalage de phase initial.

Dans un mode de réalisation, on augmente le nombre des données les moins nombreuses, dans le sens horizontal.

Dans un mode de réalisation, on augmente le nombre des données les moins nombreuses, dans le sens vertical.

Dans un mode de réalisation, les données de luminance sont les plus nombreuses et les données de chrominance sont les moins nombreuses.

Dans un mode de réalisation, les données de luminance sont quatre fois plus nombreuses que les données de chrominance.

Avantageusement, après la transformation les données de luminance et de chrominance sont stockées dans une mémoire.

Avantageusement, après stockage en mémoire, les données de luminance et de chrominance sont traitées pour changer les dimensions de l'image, le dit changement de dimensions étant effectué par le même moyen matériel que la dite transformation.

La présente invention a également pour objet un système de traitement graphique capable de mettre en oeuvre le procédé sus-mentionné, le dit système étant, préférablement, aussi capable de réaliser d'autres traitements graphiques, par exemple de changement de dimensions d'un objet graphique pour obtenir un grossissement ou une réduction d'une fenêtre affichée sur un écran de télévision ou d'ordinateur.

Le système comprend une première mémoire, une deuxième mémoire aptes à stocker des pixels en attente de traitement, un moyen de changement des dimensions des images disposé en aval de la deuxième mémoire, et une unité arithmétique et logique disposée en aval de la première mémoire et du moyen de changement des dimensions des images et capable de disposer les données reçues dans l'ordre voulu pour un affichage ultérieur, le moyen de changement des dimensions des images pouvant être utilisé pour traiter les données les moins nombreuses pour obtenir les dites données les moins nombreuses relativement à des points de coordonnées identiques à celles des données les plus nombreuses.

Dans les sous-systèmes graphiques, on peut disposer un accélérateur bidimensionnel qui agit comme un opérateur sur les objets graphiques rectangulaires tels que les fenêtres. Cet accélérateur ou module de transfert de blocs de bits appelé "blitter" est utilisé pour une mise à jour de zones de l'image, et sert avantageusement aussi à la transformation de format et à d'autres traitements graphiques.

L'invention permet donc un changement de format d'une image réalisé en temps masqué par rapport à l'affichage, en d'autres termes, de mémoire à mémoire. On peut accepter une vitesse d'éxécution du changement de format relativement lente par rapport à celle qui serait exigée en temps réel, d'où la possibilité d'un traitement de qualité mettant en oeuvre un ou plusieurs filtres à nombre de pas important, par exemple égal à cinq.

Les exigences de bande passante pour les moyens d'affichage restent inchangées. S'agissant d'un traitement de mémoire à mémoire, l'ensemble du dispositif de génération d'images numériques n'est pas forcé de suivre l'ordre standard de rafraîchissement de l'écran de visualisation. Ainsi, la quantité de mémoire nécessaire pour les mémoires tampons de ligne peut être réduite de façon significative. Les moyens de filtrage n'ont pas besoin d'être dupliqués dans le cas d'un système global relié à plusieurs moyens d'affichages graphiques.

YCbCr 420 ou 444 ne signifie pas que la luminance et la chrominance sont stockées dans des mémoires séparées. Par contre, la présente invention s'applique lorsqu'on cherche à accéder à des pixels codés en YCbCr 420 et stockés dans deux mémoires séparées.

La présente invention sera mieux comprise à l'étude de la description détaillée d'un mode de réalisation de l'invention pris à titre d'exemple nullement limitatif et illustré par les dessins annexés sur lesquels:

la figure 1 est une vue schématique de la disposition des données en format YCbCr 420;
la figure 2 est une vue schématique de la disposition des données en format YCbCr 444;
la figure 3 est une vue schématique d'un système de mise en oeuvre d'un procédé selon un mode de réalisation de l'invention; et

la figure 4 est une vue de détail de la figure 3.

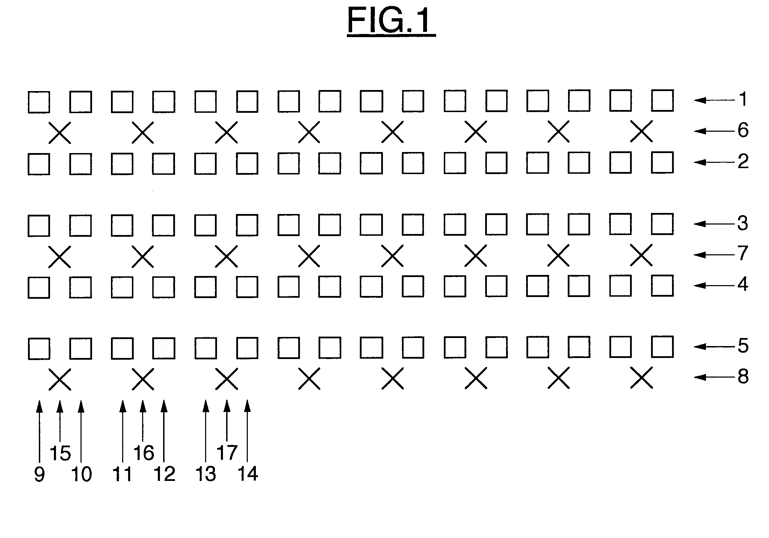

Sur la figure 1, les carrés représentent les données de luminance et les croix représentent les données de chrominance. Les données de luminance sont disposées sur des lignes référencées 1, 2, 3, 4 et 5, régulièrement espacées. Les données de chrominance sont disposées sur des lignes référencées 6, 7 et 8, également régulièrement espacées. La ligne 6 est disposée à égale distance entre les lignes 1 et 2. La ligne 7 est disposée à égale distance entre les lignes 3 et 4. La ligne 8 est disposée à égale distance entre la ligne 5 et une ligne non représentée disposée en dessous. Il n'est pas prévu de lignes de données de chrominance entre les lignes de données de luminance 2 et 3 et 4 et 5. Ainsi, le format dit YCbCr 420 comprend deux fois plus de lignes de données de luminance que de lignes de données de chrominance.

Les données de luminance sont disposées selon des colonnes dont on a référencé les premières de 9 à 14. Ces colonnes 9 à 14 sont régulièrement espacées. Les données de chrominance sont également disposées selon des colonnes régulièrement espacées. On a référencé les colonnes 15 à 17. La colonne 15 est disposée à égale distance entre les colonnes 9 et 10. La colonne 16 est disposée à égale distance entre les colonnes 11 et 12. La colonne 17 est disposée à égale distance entre les colonnes 13 et 14, et ainsi de suite.

Le format YCbCr 420 comprend donc deux fois plus de colonnes de données de luminance que de colonnes de données de chrominance. Au total, une image présentée selon le format YCbCr 420 comprend quatre fois plus de données de luminance que de données de chrominance. En d'autres termes, une donnée de chrominance a pour voisin immédiat quatre données de luminance disposées à égale distance, chacune desdites quatre données de luminance n'ayant pour voisin immédiat autre que ladite donnée de chrominance, que des données de luminance.

Ainsi, la donnée de chrominance positionnée sur la ligne 7 et la colonne 16 est voisine des données de luminance positionnées sur la ligne 3 et les colonnes 11 et 12 et sur la ligne 4 et les colonnes 11 et 12. La donnée de luminance postionnée sur la ligne 3 et la colonne 11 est voisine des données de luminance de la ligne 3 et des colonnes 10 et 12, de la ligne 2 et des colonnes 10, 11 et 12, de la ligne 4 et des colonnes 10, 11 et 12 et de la donnée de chrominance de la ligne 7 et de la colonne 16.

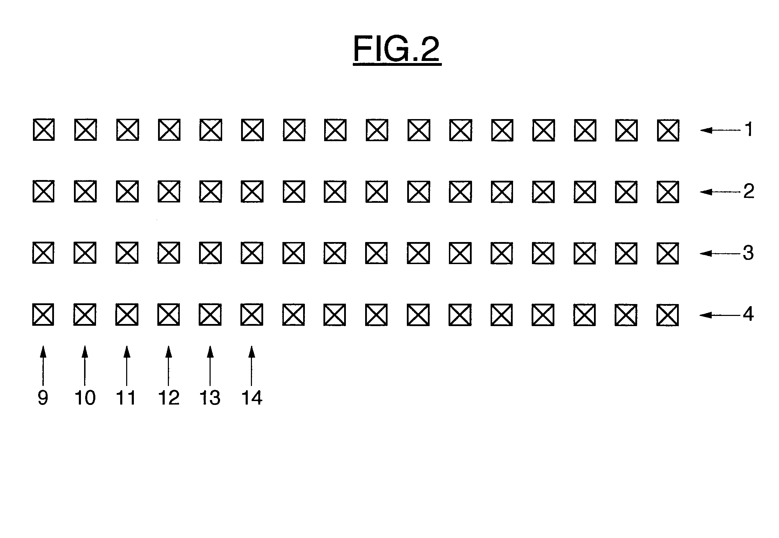

Selon le format YCbCr 444, illustré sur la figure 2, il est prévu autant de données de chrominance que de données de luminance. Les positions spatiales desdites données de luminance et de chrominance sont confondues. Ainsi, pour la position définie par l'intersection de la ligne 3 et de la colonne 11, on a une donnée de luminance et une donnée de chrominance.

On pourrait envisager de dupliquer simplement une donnée de chrominance horizontalement et verticalement et d'affecter les données de chrominance dupliquées aux quatre positions spatiales les plus proches pour lesquelles on possède des données de luminance. Toutefois, on obtient alors une image de mauvaise qualité qui ne pourrait être considérée comme satisfaisante.

Comme les échantillons de chrominance sont décimés d'un facteur 2 horizontalement et verticalement dans le format YCbCr 420, la transformation d'une image en format YCbCr 444 nécessite le quadruplement de la quantité d'informations relatives à la chrominance. La qualité de l'image obtenue en sortie dépend principalement de la façon dont les échantillons manquants sont générés. Pour la génération desdits échantillons manquants, on utilise, selon l'invention, un filtre numérique. Plus le nombre de pas du filtre est élevé, meilleure est la qualité de l'image en sortie. Lorsqu'on utilise un filtre à N pas pour la génération des échantillons manquants, N échantillons sont entrés dans le filtre pour calculer une donnée de chrominance en sortie.

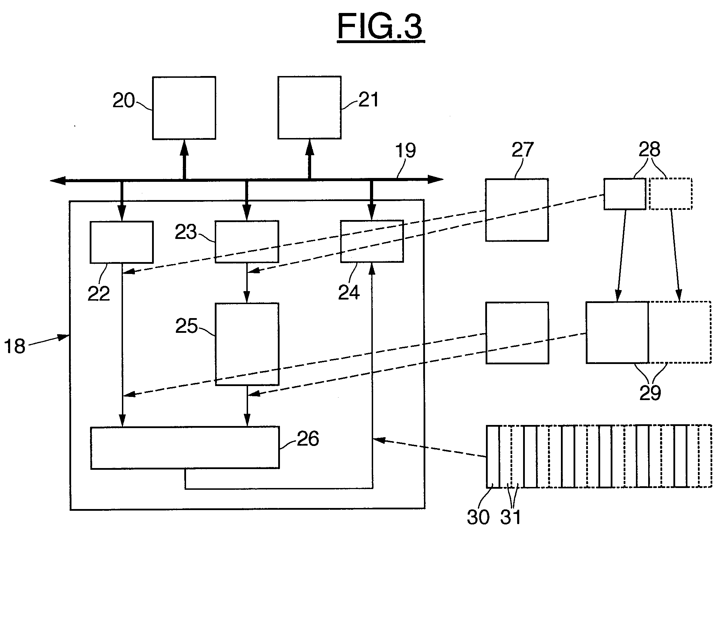

Un système graphique apte à mettre en oeuvre l'invention est illustré sur la figure 3. Le système comprend essentiellement un module de transfert de blocs de bits 18 également appelé "blitter" relié à un bus de communication 19 sur lequel des données peuvent être transférées entre le module 18 et d'autres organes tels qu'une mémoire 20, un moyen d'affichage 21 équipé par exemple d'un écran, etc. Le module 18 reçoit des données numériques stockées dans la mémoire 20 et transitant par le bus 19.

Le module 18 comprend une première mémoire 22 de type premier entré-premier sorti ou FIFO, reliée au bus 19, une deuxième mémoire 23 de même type que la mémoire 22, et reliée au bus 19. Les deux mémoires 22 et 23 sont capables de recevoir des données par l'intermédiaire du bus 19. Le module 18 comprend encore une troisième mémoire 24 de type premier entré - premier sorti, reliée au bus 19 et apte à envoyer sur ledit bus 19 des données. Les mémoires 22-23-24 ont un rôle de tampon et stockent les pixels en attente de traitement.

La sortie de la deuxième mémoire 23 est reliée à un système de traitement graphique 25 dont la sortie est reliée à une unité arithmétique et logique 26. La sortie de la première mémoire 22 est également reliée à l'unité arithmétique et logique 26. La sortie de l'unité arithmétique et logique 26 est reliée à la troisième mémoire 24.

Le module 18 fonctionne de la façon suivante. Les données de luminance 27 issues d'une première zone de la mémoire 20 transitent par le bus 19 et sont stockées dans la première mémoire 22 avant d'être fournies à l'unité arithmétique et logique 26. Les données de chrominance sous format réduit 28, par exemple sous format YCbCr 420, stockées dans une deuxième zone de la mémoire 20 transitent par le bus 19 et sont stockées par la deuxième mémoire 23, puis envoyées dans le système de traitement graphique 25 qui provoque leur transformation en augmentant le nombre desdites données et émet en sortie vers l'unité arithmétique et logique 26 des données de chrominance sous format standard 29, par exemple sous format YCbCr 444.

L'unité arithmétique et logique 26 recevant les données de luminance 27 et les données de chrominance sous format normal 29 exécute une concaténation desdites données de façon à reconstituer une chaîne de données dans laquelle les données de luminance 30 relatives à un pixel particulier sont adjacentes aux données de chrominance 31 relatives au même pixel. Les données de luminance et de chrominance concaténées sont émises en sortie vers la troisième mémoire 24, puis transitent par le bus 19 vers une mémoire, par exemple la mémoire 20, éventuellement vers une autre mémoire non représentée.

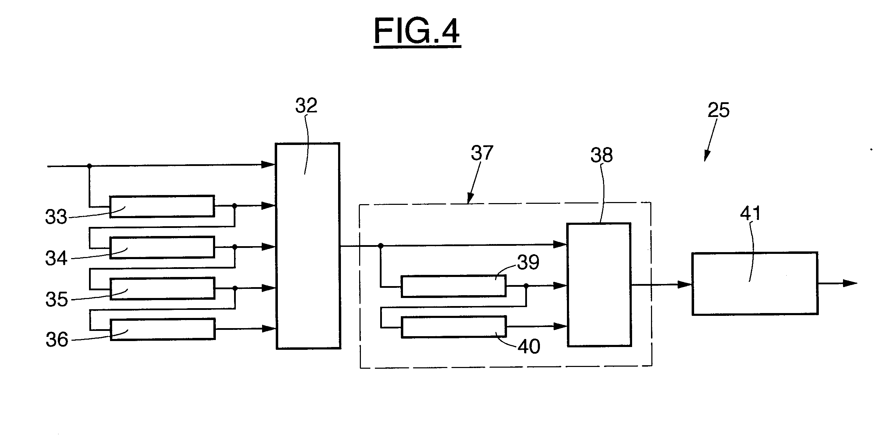

Sur la figure 4, un système de traitement graphique 25 destiné à modifier horizontalement et verticalement les dimensions d'un objet graphique et/ou à transformer le format d'un objet graphique comprend un convertisseur vertical à cinq pas 32 qui reçoit sur ses cinq entrées les données relatives aux pixels de la ligne courante et celles relatives aux pixels des quatre lignes précédentes grâce à quatre mémoires tampons 33, 34, 35 et 36 disposées pour permettre au convertisseur 32 d'effectuer l'interpolation des cinq bits reçus en même temps. Les mémoires tampons 33, 34, 35 et 36 fonctionnent selon un mode premier entré-premier sorti ou FIFO.

Le système de traitement graphique 25 comprend un filtre de flicker ou scintillement 37 pourvu d'un élément de filtrage 38 à trois pas et de deux mémoires tampons 39 et 40.

Le système de traitement graphique 25 comprend également un convertisseur horizontal à cinq pas 41 disposé à la sortie du système de filtrage 37 et apte à modifier la taille de l'objet graphique dans le sens horizontal.

La conversion tant verticale qu'horizontale s'effectue sur un nombre de bits déterminé par exemple trois. On peut ainsi agrandir l'objet graphique jusqu'à huit fois dans chaque dimension. On peut générer sept pixels de coordonnées intermédiaires entre deux pixels d'origine. Ainsi, les données de chrominance en entrée auront pour coordonnées 0,5, 2,5, 4,5, etc. alors que les données de luminance stockées dans la mémoire 22 ont pour coordonnées 1, 2, 3, 4, 5, etc.

Le convertisseur vertical 32 génère sur chaque colonne de données de chrominance, des nouvelles données de chrominance sur les lignes correspondant aux données de luminance par interpolation de cinq pixels pour en générer un. A titre d'exemple, le pixel de sortie d'une colonne quelconque et de la ligne 5 pourra être généré à partir d'une pondération des pixels des lignes 0,5, 2,5, 4,5, 6,5, et 8,5. La pondération tiendra compte de la position du pixel de sortie par rapport aux cinq pixels ayant servi à le générer. Ainsi, un pixel de sortie de la même colonne et de la ligne 4 pourra être généré à partir d'une pondération différente des mêmes pixels des lignes 0,5, 2,5, 4,5, 6,5, et 8,5.

Le convertisseur horizontal 41 génère sur chaque ligne de coordonnées identiques à celles de luminance, des nouvelles données de chrominance sur les colonnes correspondant aux données de luminance par interpolation de cinq pixels pour en générer un. La pondération pourra être du même type que celle décrite ci-dessus.

Dans le cas de l'agrandissement/réduction, le convertisseur horizontal 41 a besoin de cinq pixels d'entrée pour générer un pixel de sortie avec une pondération adaptée des cinq pixels d'entrée selon le taux d'agrandissement/réduction choisi et la position du pixel de sortie par rapport aux pixels d'entrée. A titre d'exemple, si on choisit d'agrandir horizontalement d'un facteur 2 une image graphique, le système génèrera des pixels pour les abscisses 1, 1,5, 2, 2,5 etc. Si on choisit un facteur 1,25, le système génèrera des pixels pour les abscisses 1, 1,75, 2,5, 3,25, 4 etc. Ces pixels seront ensuite rangés linéairement dans la mémoire 20 ou dans une autre mémoire. Le facteur 1,25 a un sens dans le cas d'un agrandissement, mais pour la conversion YCbCr 420 → YCbCr 444, seul le facteur 2 est utilisé.

Pour changer les dimensions d'un objet graphique rectangulaire, le procédé utilisé est un filtre numérique polyphases à N pas et $2^P$ sous-positions.

Une valeur d'incrément est codée avec une partie entière et décimale. Cet incrément représente la distance séparant deux pixels en sortie du filtre. Si cet incrément est supérieur à 1, une réduction de la dimension est réalisée. Dans le cas contraire, l'objet est agrandi.

Si l'incrément est égal à 1,25, le nombre de pixels générés est inférieur au nombre de pixels reçus en entrée du filtre.

Si l'incrément est inférieur à 1, le nombre de pixels générés est supérieur au nombre de pixels reçus. L'objet graphique est agrandi.

Ces pixels sont générés de la façon suivante. L'incrément INC se décompose en une partie entière et décimale.

A chaque fois qu'un pixel est généré, cet incrément s'ajoute au reste de la partie décimale accumulée:

$$COUNT = \text{partie décimale [COUNT]} + INC.$$

Cette variable COUNT comporte donc une partie entière et décimale. La partie entière représente le nombre de pixels à prendre en compte avant de générer le pixel suivant. La partie décimale représente la position intermédiaire du pixel à générer par rapport au dernier pixel pris en compte.

Une fois implémenté, afin de définir les sous-positions, on ne garde que les p premiers bits de la partie décimale pour faire les $2^P$ sous-positions.

A chaque sous-position, correspond un filtre à N pas effectuant une moyenne pondérée fonction de la sous-position sur les N échantillons présents dans le filtre.

A chaque fois qu'un pixel est généré, l'algorithme du filtre donne la sous-position du prochain pixel à générer et donc le numéro du filtre à appliquer (c'est la partie décimale de COUNT) ainsi que le nombre de pixels à prendre en compte (c'est la partie entière de COUNT).

Le filtre est positionné de la façon suivante pour générer les pixels. Initialement, le pixel 0 est dupliqué (N-1)/2 (N impair) fois de manière que ce filtre soit centré sur le pixel 0.

Dans le cadre du filtre vertical, la valeur de COUNT est mise à jour à la fin de chaque ligne. L'algorithme indique alors combien de lignes doivent être accédées et quelle sera la sous-position de la prochaine ligne à générer.

Dans le cadre du filtre horizontal, la valeur de COUNT est mise à jour à chaque fois qu'un pixel est généré.

Le système de traitement graphique 25 ou module de transfert de blocs de bits permet, dans un circuit graphique, une accélération du fonctionnement grâce au transfert de blocs graphiques tels qu'une fenêtre dans un environnement windows ®.

Dans d'autres modes de réalisation, on pourrait prévoir de disposer le système de filtrage 37 en aval du module de transfert de blocs de bits, ou encore de le supprimer si les images devant être traitées présentent un faible risque de scintillement.

La longueur de la mémoire de ligne est, de préférence limitée à 128 tirant ainsi bénéfice d'un système de rééchantillonage bidimensionnel basé sur les colonnes. En d'autres termes, on découpe l'image en zones dont les lignes font 128 bits pour utiliser moins de mémoire lors du filtrage. Le convertisseur vertical est disposé en amont du filtre de flicker. En effet, un convertisseur vertical à cinq pas risque de réintroduire du scintillement. Il est donc avantageux d'effectuer le filtrage du scintillement après la conversion verticale. A l'inverse, le convertisseur horizontal est disposé à l'aval du filtre de flicker de façon que la taille des mémoires de ligne ne soit pas affectée par le changement d'échelle horizontale. Ceci est possible car la conversion horizontale est une opération linéaire qui ne produit pas de scintillement supplémentaire.

Bien entendu, ce système décrit pour des images bidimensionnelles est applicable à des images tridimensionnelles basées sur une matrice de voxels.

Grâce à l'invention, on profite des caractéristiques des images graphiques qui sont en général relativement stables en ce sens que l'utilisateur les utilise pendant une durée qui peut atteindre plusieurs minutes ou plusieurs dizaines de minutes. Il est donc particulièrement avantageux de traiter le phénomène de format dès la création de l'image. On s'affranchit des contraintes temps réel et des contraintes de vitesse. On s'affranchit de la résolution de l'écran et des contraintes de bande passante. On peut traiter graphiquement avec une haute qualité des images dont le format d'origine interdisait un tel traitement.

On peut ainsi faire subir des traitements graphiques numériques de haute qualité à des images provenant d'un décodeur de type MPEG sous un format réduit, par exemple du genre YCbCr 420.

## Revendications

1. Procédé de transformation pour images numériques comprenant des données de luminance relatives à des points de premières coordonnées et des données de chrominance relatives à des points de deuxièmes coordonnées, les données de luminance et les données de chrominance étant en nombre différent, dans lequel on effectue par filtrage un traitement des données les moins nombreuses pour obtenir les dites données les moins nombreuses relativement à des points de coordonnées identiques à celles des données les plus nombreuses.

2. Procédé selon la revendication 1, dans lequel on effectue un . filtrage vertical et un filtrage horizontal.

3. Procédé selon la revendication 1 ou 2, dans lequel on effectue un filtrage à décalage de phase initial.

4. Procédé selon l'une quelconque des revendications précédentes, dans lequel on augmente le nombre des données les moins nombreuses, dans le sens horizontal.

5. Procédé selon l'une quelconque des revendications précédentes, dans lequel on augmente le nombre des données les moins nombreuses, dans le sens vertical.

6. Procédé selon l'une quelconque des revendications précédentes, dans lequel les données de luminance sont les plus nombreuses et les données de chrominance sont les moins nombreuses.

7. Procédé selon la revendication 6, dans lequel les données de luminance sont quatre fois plus nombreuses que les données de chrominance.

8. Procédé selon l'une quelconque des revendications précédentes, dans lequel après la transformation les données de luminance et de chrominance sont stockées dans une mémoire.

9. Procédé selon la revendication 8, dans lequel, après stockage en mémoire, les données de luminance et de chrominance sont traitées pour changer les dimensions de l'image, le dit changement de dimensions étant effectué par le même moyen matériel que la dite transformation.

10. Système de mise en oeuvre du procédé selon l'une quelconque des revendications précédentes, comprenant deux mémoires réalisant deux tampons contenant des pixels en attente de traitement, un moyen de changement des dimensions des images disposé en aval de la deuxième mémoire, et une unité arithmétique et logique disposée en aval de la première mémoire et du moyen de changement des dimensions des images et capable de disposer les données reçues dans l'ordre voulu pour un affichage ultérieur, le moyen de changement des dimensions des images pouvant être utilisé pour traiter les données les moins nombreuses pour obtenir les dites données les moins nombreuses relativement à des points de coordonnées identiques à celles des données les plus nombreuses.

FIG.1

EP 1 104 185 A1

# FIG.2

EP 1 104 185 A1

# FIG.3

EP 1 104 185 A1

FIG.4

**Office européen des brevets**

# RAPPORT DE RECHERCHE EUROPEENNE

Numéro de la demande

EP 00 40 3186

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 695 095 A (DISCOVISION ASSOCIATES) 31 janvier 1996 (1996-01-31) * page 53, ligne 14 - ligne 16 * * page 87, ligne 1 - page 88, ligne 12 * --- | 1-10 | H04N9/64 H04N11/20 |
| X | WO 97 24882 A (PHILIPS ELECTRONICS N.V.) 10 juillet 1997 (1997-07-10) * page 3, ligne 7 - page 4, ligne 25 * * page 5, ligne 29 - page 6, ligne 1 * --- | 1,4,6-8 | |
| X | EP 0 692 915 A (MATSUSHITA ELECTRIC INDUSTRIAL CO., LTD) 17 janvier 1996 (1996-01-17) * page 12, ligne 30 - ligne 53 * ----- | 1,5,6,8 | |

| | | | DOMAINES TECHNIQUES RECHERCHES (Int.Cl.7) |
|---|---|---|---|
| | | | H04N |

Le présent rapport a été établi pour toutes les revendications

| Lieu de la recherche | Date d'achèvement de la recherche | Examinateur |
|---|---|---|
| LA HAYE | 6 février 2001 | Pigniez, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 00 40 3186

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2001

| Document brevet cité au rapport de recherche | | Date de publication | Membre(s) de la famille de brevet(s) | | | Date de publication |
|---|---|---|---|---|---|---|
| EP 695095 | A | 31-01-1996 | AU | 2400499 | A | 03-06-1999 |
| | | | AU | 2400799 | A | 24-06-1999 |
| | | | AU | 701335 | B | 28-01-1999 |
| | | | AU | 2501995 | A | 08-02-1996 |
| | | | CA | 2154962 | A | 30-01-1996 |
| | | | CN | 1144434 | A | 05-03-1997 |
| | | | EP | 1026600 | A | 09-08-2000 |
| | | | EP | 0674266 | A | 27-09-1995 |
| | | | EP | 0895422 | A | 03-02-1999 |
| | | | EP | 0895166 | A | 03-02-1999 |
| | | | EP | 0895167 | A | 03-02-1999 |
| | | | EP | 0895161 | A | 03-02-1999 |
| | | | EP | 0892556 | A | 20-01-1999 |
| | | | EP | 0891094 | A | 13-01-1999 |
| | | | EP | 0891095 | A | 13-01-1999 |
| | | | EP | 0891096 | A | 13-01-1999 |
| | | | EP | 0891097 | A | 13-01-1999 |
| | | | EP | 0891098 | A | 13-01-1999 |
| | | | EP | 0891099 | A | 13-01-1999 |
| | | | GB | 2287808 | A,B | 27-09-1995 |
| | | | GB | 2293076 | A,B | 13-03-1996 |
| | | | JP | 8172624 | A | 02-07-1996 |
| | | | US | 6141721 | A | 31-10-2000 |
| | | | US | 5821885 | A | 13-10-1998 |
| | | | US | 5798719 | A | 25-08-1998 |
| | | | US | 5768629 | A | 16-06-1998 |
| | | | US | 5740460 | A | 14-04-1998 |
| | | | US | 5703793 | A | 30-12-1997 |
| | | | US | 5828907 | A | 27-10-1998 |
| | | | US | 5963154 | A | 05-10-1999 |
| | | | US | 5878273 | A | 02-03-1999 |
| | | | US | 5829007 | A | 27-10-1998 |
| | | | US | 5835792 | A | 10-11-1998 |
| | | | US | 5984512 | A | 16-11-1999 |
| | | | US | 5995727 | A | 30-11-1999 |
| WO 9724882 | A | 10-07-1997 | AUCUN | | | |
| EP 692915 | A | 17-01-1996 | JP | 2933487 | B | 16-08-1999 |
| | | | JP | 8033002 | A | 02-02-1996 |
| | | | US | 5650824 | A | 22-07-1997 |

EPO FORM P0460

Pour tout renseignement concernant cette annexe : voir Journal Officiel de l'Office européen des brevets, No.12/82